# EUROPÄISCHE PATENTANMELDUNG

(11) **EP 1 275 786 A2**
(43) Veröffentlichungstag der Anmeldung: **15.01.2003**
(21) Anmeldenummer: 02005582.8
(22) Anmeldetag: 12.03.2002
(51) Int. Cl.: E03C 1/186

(54) **Verfahren zum Zuordnen von Zubehörteilen zu Spülen**

(30) Priorität: 14.07.2001 DE 10134311
(71) Anmelder: BLANCO GmbH + Co KG, 75038 Oberderdingen (DE)
(72) Erfinder: Schippmann, Kai, 76227 Karlsruhe (DE); Kuch, Oliver, 75038 Oberderdingen (DE); Reitzig, Wolfgang, 75015 Bretten (DE)
(74) Vertreter: Hörner, Andreas

(57) **Zusammenfassung**

Um zu gewährleisten, daß auch dann, wenn Spülen mindestens ein, insbesondere aufgrund von Fertigungstoleranzen, variierendes Maß aufweisen, jedem Exemplar der Spüle ein an dieser Spüle voll funktionsfähiges Zubehörteil zugeordnet werden kann, wird ein Verfahren zum Zuordnen von Zubehörteilen zu Spülen vorgeschlagen, welches folgende Verfahrensschritte umfaßt:
- Zuordnung einer Spüle zu einer Klasse einer Klasseneinteilung, die mehrere Klassen umfaßt, wobei jeder Klasse ein Intervall von Werten des variierenden Maßes zugeordnet ist; und
- Zuordnung eines Zubehörteils zu der Spüle in Abhängigkeit von der Klasse, welcher die Spüle zugeordnet worden ist.

## Beschreibung

Die vorliegende Erfindung betrifft ein Verfahren zum Zuordnen von Zubehörteilen zu Spülen.

Bei solchen Zubehörteilen kann es sich insbesondere um auf eine Spüle aufzulegende Auflageelemente oder in ein Becken der Spüle einzuhängende Einhängeelemente handeln.

Insbesondere können die Zubehörteile als Schneidbrett, Resteschale, Geschirrablage und/oder als Tropfblech ausgebildet sein.

In dieser Beschreibung und den beigefügten Ansprüchen umfaßt der Begriff "Spüle" insbesondere auch ein einzelnes Spülbekken, welches einzeln verwendet oder in ein Möbel oder eine Arbeitsplatte integriert ist.

Damit die genannten Zubehörteile in vorgesehener Weise an der Spüle angeordnet (beispielsweise aufgelegt oder eingehängt) werden und gegebenenfalls längs Führungskanten der Spüle verschoben werden können, ist es erforderlich, daß mindestens ein Funktionsmaß A' des Zubehörteils auf mindestens ein Funktionsmaß A der Spüle abgestimmt ist.

Weicht die Differenz zwischen den Funktionsmaßen A' und A zu sehr von einem vorgegebenen Sollwert ab, so ist die Funktionalität des betreffenden Zubehörteils an der betreffenden Spüle stark eingeschränkt, und im Extremfall kann das betreffende Zubehörteil überhaupt nicht an der betreffenden Spüle verwendet werden.

Handelt es sich bei dem Zubehörteil beispielsweise um ein Schneidbrett, welches an zwei Führungskanten der Spüle längs einer Verschiebungsrichtung verschieblich geführt ist, so kann es zu einer Verklemmung des Schneidbretts an der Spüle kommen, wenn der Abstand A' zwischen den Führungsausnehmungen des Schneidbrettes relativ zu dem Abstand A der Führungskanten der Spüle zu groß ist. Ist andererseits das Funktionsmaß A' des Schneidbrettes im Vergleich zu dem Funktionsmaß A der Spüle zu klein, so ist das Spiel, mit dem das Schneidbrett an der Spüle geführt wird, zu groß, so daß keine sichere Führung des Schneidbretts an der Spüle gewährleistet ist und das Schneidbrett unerwünschterweise quer zu der Führungsrichtung verschoben werden kann, was bei einer Benutzung des Schneidbretts unerwünscht ist und sogar gefährlich werden kann.

Werden die Spülen aus einem maßhaltigen Material, wie beispielsweise Edelstahl oder Kunststoff, gefertigt, so können in der Regel bei der Fertigung der Spüle so enge Toleranzen eingehalten werden, daß jedes für das Nennmaß passend gefertigte Zubehörteil an jeder hergestellten Spüle funktionsfähig ist.

Werden die Spülen aus einem weniger maßhaltigen Material, beispielsweise aus Keramik, gefertigt, so überschreiten die Fertigungstoleranzen in vielen Fällen die für eine optimale Funktion des Zubehörteils zulässige Abweichung des Istmaßes vom Nennmaß.

In diesen Fällen ist es daher nicht möglich, ein Zubehörteil mit einem Funktionsmaß A' herzustellen, welches für alle Exemplare der Spüle gleichermaßen paßt.

Der vorliegenden Erfindung liegt daher die Aufgabe zugrunde, ein Verfahren zum Zuordnen von Zubehörteilen zu Spülen zu schaffen, welches gewährleistet, daß auch dann, wenn die Spülen mindestens ein, insbesondere aufgrund von Fertigungstoleranzen, variierendes Maß A aufweisen, jedem Exemplar der Spüle ein an dieser Spüle voll funktionsfähiges Zubehörteil zugeordnet werden kann.

Diese Aufgabe wird erfindungsgemäß durch ein Verfahren zum Zuordnen von Zubehörteilen zu Spülen, wobei die Spülen mindestens ein, insbesondere aufgrund von Fertigungstoleranzen, variierendes Maß A aufweisen, gelöst, welches die folgenden Verfahrensschritte umfaßt:
- Zuordnung einer Spüle zu einer Klasse einer Klasseneinteilung, die mehrere Klassen umfaßt, wobei jeder Klasse ein Intervall von Werten des variierenden Maßes A zugeordnet ist; und
- Zuordnung eines Zubehörteils zu der Spüle in Abhängigkeit von der Klasse, welcher die Spüle zugeordnet worden ist.

Der erfindungsgemäßen Lösung liegt somit das Konzept zugrunde, die hinsichtlich des Funktionsmaßes A variierenden Spülen in mehrere Klassen einer Klasseneinteilung einzuordnen und anschließend jeder Spüle, in Abhängigkeit von ihrer Grössenklasse, ein für die betreffende Klasse passendes Zubehörteil zuzuordnen.

Auf diese Weise kann eine unzulässig große Abweichung zwischen den Funktionsmaßen A' des Zubehörteils und A der Spüle in jedem Falle vermieden werden.

Die Zuordnung des Zubehörteils zu der Spüle kann dabei beim Kommissionieren vor der Auslieferung der Spüle oder bei der Ausführung einer Nachbestellung eines Zubehörteils nach Auslieferung der Spüle erfolgen.

Um eine hinreichend große Gesamt-Fertigungstoleranz der Spülen bei hinreichend großer Paßgenauigkeit zwischen Zubehörteil und Spüle abdecken zu können, ist vorteilhafterweise vorgesehen, daß die Klasseneinteilung mindestens 3, vorzugsweise mindestens 6, verschiedene Klassen umfaßt.

Um die Information über die Klasse, welcher eine Spüle zugeordnet worden ist, zur späteren Verwendung, beispielsweise im Falle einer Nachbestellung eines Zubehörteils, zur Verfügung zu haben, wird vorteilhafterweise die einer Klasse zugeordnete Spüle und/oder deren Verpackung mit einer der Klasse zugeordneten Markierung versehen.

Insbesondere kann vorgesehen sein, daß die der Klasse zugeordnete Markierung mindestens ein alphanumerisches Zeichen, vorzugsweise einen Buchstaben, umfaßt.

Die Markierung kann beispielsweise als eine in Abhängigkeit von der Größenklasse variierende Artikelnummer ausgebildet sein.

Günstiger ist jedoch, wenn jede Spüle derselben Art mit derselben Artikelnummer bezeichnet wird und die Klasse jeder Spüle durch eine zusätzlich zu der Artikelnummer vorgesehene Markierung angegeben wird.

Die Markierung kann in jeder geeigneten Weise an der Spüle und/oder deren Verpackung angebracht werden.

Bei einer bevorzugten Ausgestaltung der Erfindung ist vorgesehen, daß die Markierung durch Stempeln angebracht wird.

Um eine Spüle einer der Klassen der Klasseneinteilung zuzuordnen, gibt es verschiedene Möglichkeiten, welche alternativ angewandt oder miteinander kombiniert werden können.

So kann die Zuordnung einer Spüle zu einer Klasse beispielsweise dadurch erfolgen, daß der Wert des Funktionsmaßes A an der Spüle bestimmt wird und die Spüle derjenigen Klasse zugeordnet wird, deren Intervall den bestimmten Wert des Maßes umfaßt.

Insbesondere kann der Wert des Funktionsmaßes A an der Spüle mittels eines geeigneten Längenmeßverfahrens gemessen und die Spüle derjenigen Klasse zugeordnet werden, deren Intervall den gemessenen Wert für das Funktionsmaß A umfaßt.

Alternativ oder ergänzend hierzu kann die Zuordnung einer Spüle zu einer Klasse auch dadurch erfolgen, daß mindestens ein einer Klasse zugeordnetes Vergleichsobjekt mit dem Maß A der Spüle verglichen wird.

Insbesondere kann vorgesehen sein, daß mehrere Vergleichsobjekte mit dem Maß A der Spüle verglichen werden und die Spüle derjenigen Klasse zugeordnet wird, welcher das Vergleichsobjekt mit dem größten zu der Spüle passenden Vergleichsmaß zugeordnet ist.

Als Vergleichsobjekt kann beispielsweise eine Lehre verwendet werden, was den Vorteil bietet, daß eine solche Lehre einfach herstellbar und handhabbar ist.

Insbesondere kann vorgesehen sein, daß für jede der Klassen der Klasseneinteilung eine Lehre verwendet wird, deren Vergleichsmaß der oberen Intervallgrenze des Funktionsmaßes der jeweiligen Klasse entspricht. An jeder zu klassifizierenden Spüle wird dann geprüft, welches die Lehre mit dem größten Vergleichsmaß ist, die sich mit der betreffenden Spüle paaren läßt. Die betreffende Spüle wird dann derjenigen Klasse zugeordnet, welcher diese größte passende Lehre zugeordnet ist.

Alternativ oder ergänzend zur Verwendung einer Lehre als Vergleichsobjekt kann auch vorgesehen sein, daß als Vergleichsobjekt ein Zubehörteil verwendet wird. Durch die Verwendung eines Zubehörteils als Vergleichsobjekt ergibt sich der Vorteil, daß bei der Zuordnung der Spüle zu einer der Klassen die gesamte Funktion des jeweiligen Zubehörteils an der Spüle geprüft werden kann.

Dies ist insbesondere dann von Vorteil, wenn die Funktionalität des Zubehörteils an der Spüle von mehreren Maßen der Spüle abhängt, welche aufgrund von Fertigungstoleranzen variieren.

Um eine Kombination einer Spüle mit einem genau zu der betreffenden Spüle passenden Zubehörteil herzustellen, kann vorgesehen sein, daß dieses Zubehörteil nach der Zuordnung zu der Spüle zusammen mit der Spüle verpackt wird.

Für die Zuordnung der Zubehörteile zu den Spülen in Abhängigkeit von der Klasse, welcher die Spülen jeweils zugeordnet worden sind, gibt es mehrere Möglichkeiten, die alternativ zueinander oder in Kombination angewandt werden können.

So kann beispielsweise vorgesehen sein, daß das Zubehörteil mit einem einer Klasse zugeordneten Maß A' gefertigt wird, bevor es einer derselben Klasse zugeordneten Spüle zugeordnet wird.

Anders ausgedrückt, werden die Zubehörteile in diesem Fall für jeweils eine der verschiedenen Klassen der Klasseneinteilung mit einer entsprechend geringen Toleranz passend gefertigt, was ohne weiteres möglich ist, wenn die Zubehörteile aus einem maßhaltigen Material, beispielsweise aus Holz oder Edelstahl, hergestellt werden, so daß die erforderlichen engen Toleranzen bei der Fertigung der Zubehörteile eingehalten werden können.

Zu beachten ist, daß das Maß A', mit welchem das Zubehörteil hergestellt wird, von dem Maß A einer derselben Klasse zugeordneten Spüle abweichen kann.

So kann insbesondere vorgesehen sein, daß das Maß A' des Zubehörteils um einen vorgegebenen Betrag kleiner ist als das Maß A der derselben Klasse zugeordneten Spüle, um ein gewisses Spiel für das Auflegen, Einhängen und/oder Verschieben des Zubehörteils an der Spüle bereitzustellen.

Ferner kann vorgesehen sein, daß das Zubehörteil auf ein einer Klasse zugeordnetes Maß A' eingestellt wird, bevor es einer derselben Klasse zugeordneten Spüle zugeordnet wird.

In diesem Fall ist das Funktionsmaß A' des Zubehörteils flexibel verstellbar und kann somit der jeweiligen Spüle angepaßt werden. Diese Anpassung kann durch den Hersteller oder durch den Abnehmer erfolgen.

Ferner ist es möglich, daß das Zubehörteil einer der Klassen der Klasseneinteilung zugeordnet wird, bevor es einer derselben Klasse zugeordneten Spüle zugeordnet wird.

Ein solches Vorgehen ist insbesondere dann empfehlenswert, wenn auch das Zubehörteil aus einem nicht maßhaltigen Material gefertigt wird, so daß auch bei der Fertigung des Zubehörteils die erforderlichen engen Toleranzen nicht eingehalten werden können. In diesem Fall werden die Zubehörteile mit einem ungefähr der Mitte der Klasseneinteilung entsprechenden Sollmaß A' hergestellt und anschließend, in Abhängigkeit von ihrem Istmaß, in die verschiedenen Klassen der Klasseneinteilung klassifiziert.

Hierbei ist auch denkbar, daß die Zuordnung der Zubehörteile zu den Klassen der Spüle-Klasseneinteilung auf indirekte Weise erfolgt, indem zunächst jedes Zubehörteil einer Klasse einer Zubehör-Klasseneinteilung zugeordnet wird, wobei die Klassen der Zubehör-Klasseneinteilung wiederum den Klassen der Spülen-Klasseneinteilung zugeordnet sind.

Um die Information über die Klasse, welcher ein Zubehörteil zugeordnet ist, zur späteren Verwendung zur Verfügung zu haben, ist vorteilhafterweise vorgesehen, daß das einer Klasse zugeordnete Zubehörteil und/oder dessen Verpackung mit einer der Klasse zugeordneten Markierung, beispielsweise mit einem alphanumerischen Zeichen, insbesondere mit einem Buchstaben, versehen wird.

Die Zuordnung von Zubehörteilen zu den Spülen gestaltet sich dann besonders einfach, wenn vorgesehen ist, daß die Spüle und/oder deren Verpackung mit einer der Klasse, welcher die Spüle zugeordnet worden ist, zugeordneten Spülenmarkierung versehen wird und daß das Zubehörteil und/oder dessen Verpackung mit einer der Klasse, der das Zubehörteil zugeordnet worden ist, zugeordneten Zubehörteilmarkierung versehen wird, wobei die derselben Klasse zugeordneten Zubehörmarkierungen und Spülenmarkierungen miteinander übereinstimmen.

Anspruch 17 ist auf eine Spüle gerichtet, die mindestens ein, insbesondere aufgrund von Fertigungstoleranzen, variierendes Maß A aufweist, wobei die Spüle mit einer Markierung versehen ist, welche einer Klasse aus einer Klasseneinteilung zugeordnet ist, wobei jeder Klasse der Klasseneinteilung ein Intervall von Werten des variierenden Maßes A zugeordnet ist.

Anspruch 18 ist auf eine Verpackung einer Spüle gerichtet, wobei die Spüle mindestens ein, insbesondere aufgrund von Fertigungstoleranzen, variierendes Maß A aufweist, wobei die Verpackung mit einer Markierung versehen ist, welche einer Klasse aus einer Klasseneinteilung zugeordnet ist, wobei jeder Klasse der Klasseneinteilung ein Intervall von Werten des variierenden Maßes A der Spüle zugeordnet ist.

Anspruch 19 ist auf ein Zubehörteil für eine Spüle gerichtet, wobei die Spüle mindestens ein, insbesondere aufgrund von Fertigungstoleranzen, variierendes Maß A aufweist, wobei das Zubehörteil mit einer Markierung versehen ist, welche einer Klasse aus einer Klasseneinteilung zugeordnet ist, wobei jeder Klasse der Klasseneinteilung ein Intervall von Werten des variierenden Maßes A der Spüle zugeordnet ist.

Ein solches Zubehörteil kann insbesondere ein auf die Spüle aufzulegendes Auflageelement oder ein in die Spüle einzuhängendes Einhängeelement sein, beispielsweise ein Schneidbrett, eine Resteschale, eine Geschirrablage oder ein Tropfblech.

Anspruch 20 ist auf eine Verpackung eines Zubehörteils für eine Spüle gerichtet, wobei die Spüle mindestens ein, insbesondere aufgrund von Fertigungstoleranzen, variierendes Maß A aufweist, wobei die Verpackung mit einer Markierung versehen ist, welche einer Klasse aus einer Klasseneinteilung zugeordnet ist, wobei jeder Klasse der Klasseneinteilung ein Intervall von Werten des variierenden Maßes A der Spüle zugeordnet ist.

Anspruch 21 ist auf eine Kombination aus einer Spüle und einem Zubehörteil für die Spüle gerichtet, wobei die Spüle mindestens ein, insbesondere aufgrund von Fertigungstoleranzen, variierendes Maß A aufweist, wobei die Spüle und/oder eine Verpackung der Spüle mit einer Markierung versehen ist, welche einer Klasse aus einer Klasseneinteilung zugeordnet ist, wobei jeder Klasse der Klasseneinteilung ein Intervall von Werten des variierenden Maßes A der Spüle zugeordnet ist.

Bei einer bevorzugten Ausgestaltung einer solchen erfindungsgemäßen Kombination ist vorgesehen, daß das Zubehörteil und/oder dessen Verpackung mit einer Markierung versehen ist, welche einer Klasse aus einer Klasseneinteilung zugeordnet ist, wobei jeder Klasse der Klasseneinteilung ein Intervall von Werten des variierenden Maßes A der Spüle zugeordnet ist.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung einer Spüle mit einem in der Längsrichtung der Spüle verschieblich geführten Schneidbrett;
- Fig. 2: einen schematischen Querschnitt durch die Spüle aus Figur 1 und das verschieblich an derselben geführte Schneidbrett;
- Fig. 3: eine ausschnittsweise schematische Draufsicht von unten auf die Spüle aus Figur 1;
- Fig. 4: eine Darstellung möglicher Markierungen der Verpackung eines Zubehörteils, die verschiedenen Klassen zugeordnet sind; und
- Fig. 5: eine schematische perspektivische Darstellung einer Verpackung eines Zubehörteils, welche mit einer der Markierungen aus Figur 4 versehen ist.

Gleiche oder funktional äquivalente Elemente sind in allen Figuren mit denselben Bezugszeichen bezeichnet.

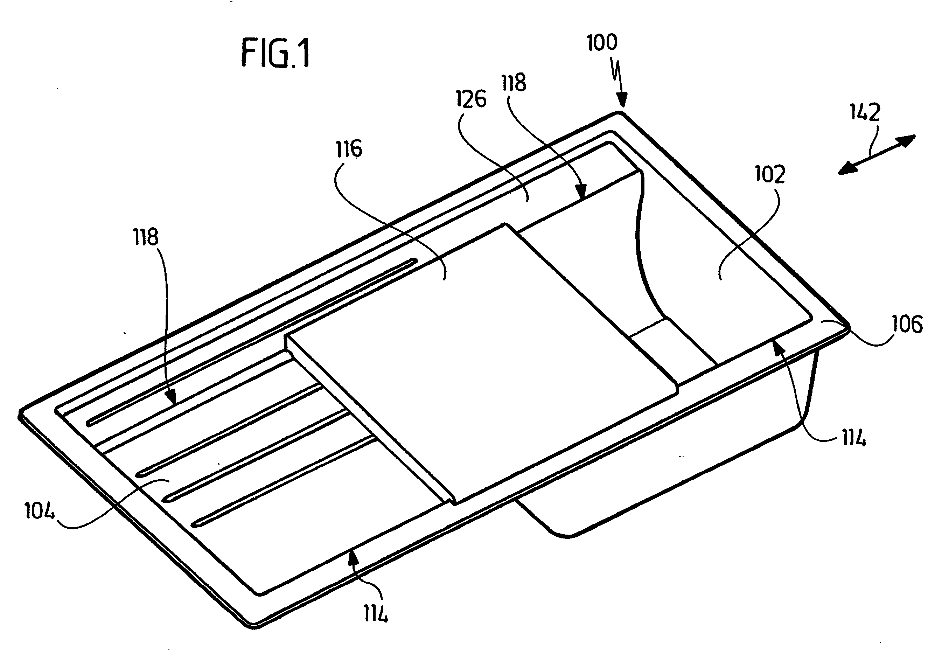

Eine in den Figuren 1 bis 3 dargestellte, als Ganzes mit 100 bezeichnete Spüle umfaßt ein Spülbecken 102, eine neben dem Spülbecken 102 angeordnete Abtropffläche 104 und einen das Spülbecken 102 und die Abtropffläche 104 umgebenden, erhöhten Rand 106.

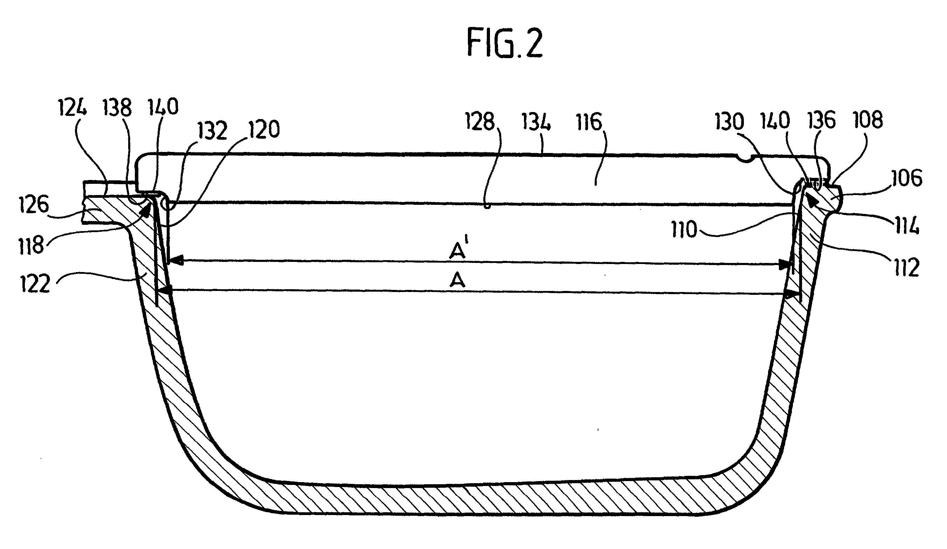

Wie am besten aus dem Querschnitt der Figur 2 zu ersehen ist, bildet die Oberseite 108 des erhöhten Randes 106 zusammen mit der Innenseite 110 der Vorderwand 112 der Spüle 100 eine vordere Führungsschulter 114 für ein Spülenzubehörteil, das beispielsweise als ein im wesentlichen quaderförmiges Schneidbrett 116 ausgebildet ist.

Eine sich parallel zu der vorderen Führungsschulter 114 erstreckende Führungsschulter 118 wird von der Innenseite 120 einer Rückwand 122 des Spülbeckens 102 und von der Oberseite 124 einer sich zwischen dem Spülbecken 102 und dem erhöhten Rand 106 erstreckenden Armaturen-Tragefläche 126 bzw. von einem Absatz in der Abtropffläche 104 gebildet.

Das Schneidbrett 116 weist am vorderen Rand seiner Unterseite 128 eine vordere Führungsausnehmung 130 zur Aufnahme der vorderen Führungungsschulter 114 und an dem hinteren Rand seiner Unterseite 128 eine hintere Führungsausnehmung 132 zur Aufnahme der hinteren Führungsschulter 118 auf.

Um trotz des unterschiedlichen Höhenniveaus der vorderen Führungsschulter 114 einerseits und der hinteren Führungsschulter 118 andererseits zu erreichen, daß die Oberseite 134 des Schneidbretts 116 bei an der Spüle 100 angeordnetem Schneidbrett 116 horizontal ausgerichtet ist, weisen die Oberseite 136 der vorderen Führungsausnehmung 130 und die Oberseite 138 der hinteren Führungsausnehmung 132 unterschiedliche Höhen über der Unterseite 128 des Schneidbretts 116 auf.

Um ein möglichst reibungsfreies Gleiten des Schneidbretts 116 auf der Oberseite 108 des erhöhten Randes 106 und auf der Oberseite 124 der Armaturen-Tragefläche 126 zu ermöglichen, sind die Oberseite 136 der vorderen Führungsausnehmung 130 und die Oberseite 138 der hinteren Führungsausnehmung 132 jeweils mit mehreren, beispielsweise jeweils mit zwei, Gleitelementen 140 versehen, welche beispielsweise als Gleitfüße aus Kork oder aus einem Kunststoffmaterial ausgebildet sein können.

Damit das Schneidbrett 116 in der Längsrichtung 142 der Spüle 100 verschieblich ist, ohne daß sich das Schneidbrett 116 zwischen den beiden Führungsschultern 114 und 118 verklemmt, muß der Abstand A' zwischen der vorderen Führungsausnehmung 130 und der hinteren Führungsausnehmung 132 an dem Schneidbrett 116 geringfügig kleiner sein als der Abstand A zwischen der vorderen Führungsschulter 114 und der hinteren Führungsschulter 118 der Spüle 100 auf der Höhe der Unterseite 128 des Schneidbretts 116 (siehe Figur 2).

Andererseits darf die Differenz zwischen dem Maß A' des Spülbretts 116 und dem Maß A der Spüle 100 nicht zu groß werden, da sonst das Schneidbrett 116 nicht mehr sauber an den Führungsschultern 114 und 118 geführt wäre und sich das Schneidbrett 116 bei dessen Benutzung quer zur Längsrichtung 142 der Spüle 100 verschieben könnte, weil das Schneidbrett 116 in dieser Richtung ein zu großes Spiel aufweisen würde.

Um eine sichere Führung des Schneidbretts 116 an den Führungsschultern 114 und 118 zu gewährleisten und dem Schneidbrett 116 einen sicheren Halt gegen Verschiebungen quer zu der Längsrichtung 142 zu bieten, sollte die Differenz zwischen dem Maß A der Spüle 100 und dem Maß A' des Schneidbretts 116 nicht größer sein als ungefähr 2 mm.

Insbesondere Spülen aus Keramikmaterial sind nicht innerhalb solch kleiner Toleranzen herstellbar.

Vielmehr beträgt die Toleranz des Maßes A der Spüle bei Verwendung eines Keramikmaterials typischerweise +/- 6 mm.

Es ist daher nicht möglich, ein Schneidbrett 116 mit einem Maß A' herzustellen, welches für alle Exemplare der Spüle 100 gleichermaßen paßt.

Um dennoch jeder Spüle 100 ein ausreichend passgenaues Schneidbrett 116 zuordnen zu können, wird wie folgt vorgegangen:

Jede Spüle 100 wird, in Abhängigkeit von ihrem Funktionsmaß A, jeweils einer Klasse einer Klasseneinteilung zugeordnet, wobei diese Klasseneinteilung mehrere Größenklassen umfaßt und jeder Größenklasse ein Intervall von Werten des aufgrund von Fertigungstoleranzen variierenden Maßes A zugeordnet ist.

Beträgt das Nennmaß A der Spüle 100 beispielsweise 351 mm und die Fertigungstoleranz +/- 6 mm, so kann die Klasseneinteilung beispielsweise die folgenden 6 Größenklassen umfassen, denen jeweils als Klassensymbol einer der Buchstaben K bis P zugeordnet ist:

| **Klassensymbol** | **Funktionsmaß A der Spüle** |
|---|---|
| K | bis 347 mm |
| L | mehr als 347 mm bis zu 349 mm |
| M | mehr als 349 mm bis zu 351 mm |
| N | mehr als 351 mm bis zu 353 mm |
| O | mehr als 353 mm bis zu 355 mm |
| P | mehr als 355 mm bis zu 357 mm |

Steigt die auftretende Fertigungstoleranz bei gleich bleibender Anforderung an die Paßgenauigkeit zwischen Spüle und Zubehörteil an, so kann die Anzahl der verwendeten Größenklassen entsprechend erhöht werden.

Nehmen die Anforderungen an die Paßgenauigkeit zwischen Spüle und Zubehörteil bei gleich bleibender Fertigungstoleranz zu oder ab, so können die den einzelnen Klassen zugeordneten Intervalle verkleinert bzw. vergrößert und die Anzahl der zur Überdeckung der gesamten Fertigungstoleranz erforderlichen Größenklassen entsprechend erhöht bzw. erniedrigt werden.

Die Zuordnung einer Spüle 100 zu einer der Klassen K bis P erfolgt mittels Lehren.

Für jede Klasse K bis P wird eine Lehre verwendet, deren Vergleichsmaß der oberen Intervallgrenze des Funktionsmaßes der jeweiligen Klasse entspricht.

An jeder zu klassifizierenden Spüle 100 wird dann geprüft, welches die Lehre mit dem größten Vergleichsmaß ist, die sich mit der betreffenden Spüle 100 paaren, d.h. zwischen die Führungsschultern 114 und 118 einsetzen läßt. Die betreffende Spüle 100 wird dann derjenigen Klasse zugeordnet, welcher diese größte passende Lehre zugeordnet ist.

Kann beispielsweise die der Klasse N zugeordnete Lehre mit der zu klassifizierenden Spüle 100 gepaart werden, die der Klasse O zugeordnete Lehre jedoch nicht, so wird die betreffende Spüle 100 der Klasse N zugeordnet.

Statt die einzelnen Spülen 100 mittels Lehren zu klassifizieren, kann diese Klassifizierung auch mittels einer der Anzahl der Klassen entsprechenden Anzahl von Schneidbrettern 116 vorgenommen werden, deren Funktionsmaße A' jeweils der oberen Intervallgrenze des Funktionsmaßes einer Klasse der Klasseneinteilung entsprechen.

Ferner ist es möglich, das Funktionsmaß A einer zu klassifizierenden Spüle 100 mit einem beliebigen Längenmeßverfahren zu messen und die jeweilige Spüle anschließend derjenigen Klasse K bis P zuzuordnen, in deren Intervall das gemessene Funktionsmaß A fällt.

Um die Information über die Größenklasse der Spüle 100 zur späteren Verwendung, beispielsweise im Falle einer Nachbestellung eines Zubehörteils, zur Verfügung zu haben, wird die Spüle 100 mit einer Markierung versehen, aus der die Klasse, welcher die Spüle 100 zugeordnet ist, zu ersehen ist.

Beispielsweise kann vorgesehen sein, daß diese Markierung das der jeweiligen Klasse zugeordnete Klassensymbol, also beispielsweise den Buchstaben "M", umfaßt.

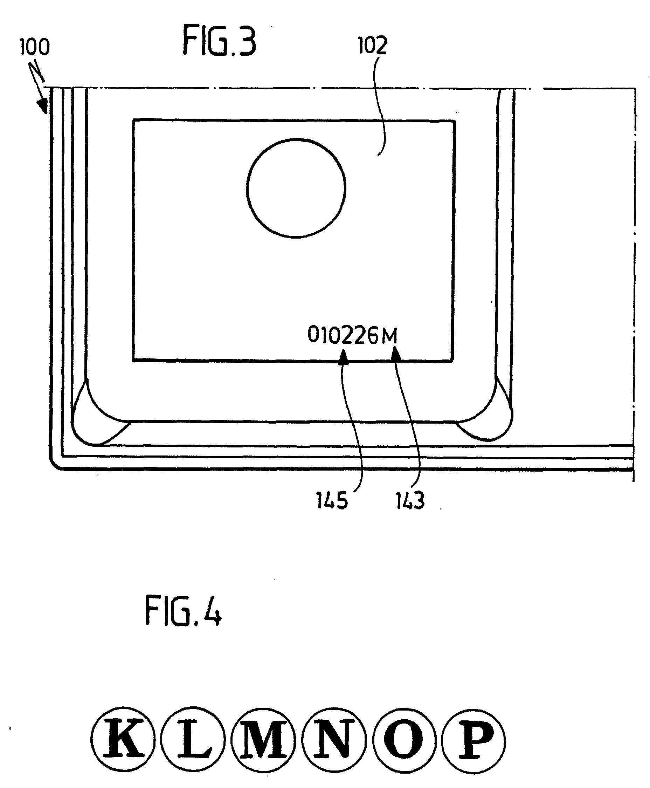

Wie aus Figur 3 zu ersehen ist, wird die Markierung 143 vorzugsweise an einer im normalen Betrieb der Spüle 100 nicht sichtbaren Stelle der Spüle 100, beispielsweise an der Unterseite des Bodens des Spülbeckens 102, angebracht.

Die Markierung kann beispielsweise durch Aufstempeln an der Spüle 100 angebracht werden. Ferner ist es möglich, die Spüle mit einem Haftetikett zu versehen, auf welches die Markierung aufgedruckt ist.

Die Markierung kann entweder für sich allein oder zusammen mit weiteren die Spüle 100 betreffenden Informationen, beispielsweise zusammen mit einer von Spüle zu Spüle konstanten Produktnummer 145 (z.B. "010226") oder einer von Spüle zu Spüle verschiedenen Einzelteil-Seriennummer, an der Spüle 100 angeordnet werden.

Alternativ oder ergänzend zu einer Anordnung der Information über die der Spüle 100 zugeordneten Klasse an der Spüle selbst kann auch vorgesehen sein, daß diese Klassen-Information zusammen mit einer Einzelteil-Seriennummer der Spüle in einer Datenbank abgelegt wird, so daß mittels dieser Datenbank zu einem späteren Zeitpunkt zu jeder Spüle 100 die zugehörige Größenklasse ermittelbar ist, wenn die Seriennummer der Spüle 100 bekannt ist.

Die Schneidbretter 116 werden mit einer entsprechend geringen Toleranz von beispielsweise +/- 1 mm für jeweils eine der, beispielsweise sechs, verschiedenen Klassen K bis P passend gefertigt. Da die Schneidbretter aus Holz hergestellt werden, ist es ohne weiteres möglich, diese engen Toleranzen bei der Fertigung der Schneidbretter 116 einzuhalten.

Um die für verschiedene Klassen jeweils passenden Schneidbretter voneinander unterscheiden zu können, werden die Schneidbretter 116 selbst oder deren Verpackungen mit einer Markierung versehen, welche der jeweiligen Klasse zugeordnet ist.

In Figur 4 sind sechs verschiedene Stempel dargestellt, welche zur Kennzeichnung von Zubehörteilen für die sechs verschiedenen Klassen K bis P verwendet werden können.

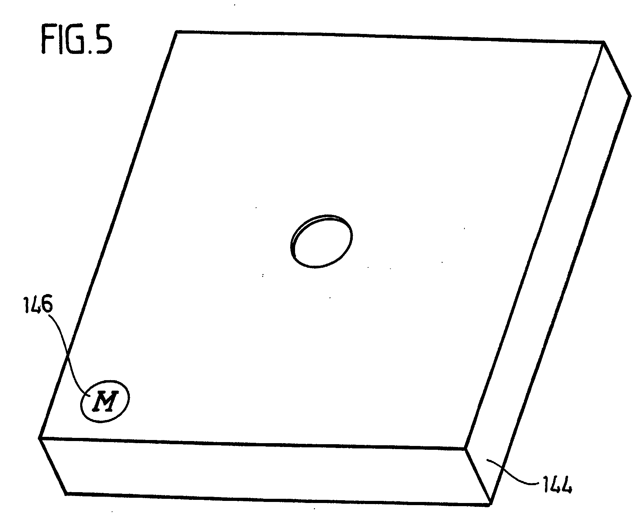

In Figur 5 ist eine Zubehörteilverpackung 144 dargestellt, die an ihrer Außenseite mit einer Markierung 146 versehen ist, welche die Klasse (beispielsweise "M") angibt, welcher das in der Verpackung enthaltene Zubehörteil, beispielsweise ein Schneidbrett 116, zugeordnet ist.

Zur Herstellung einer Kombination aus einer Spüle 100 und einem dazu passenden Schneidbrett 116 vor der Auslieferung wird der betreffenden Spüle 100 ein Schneidbrett 116 zugeordnet, welches derselben Klasse zugeordnet ist, in welche die betreffende Spüle 100 klassifiziert worden ist. Dadurch ist ein hinreichend geringer Abstand zwischen dem Funktionsmaß A der betreffenden Spüle 100 und dem Funktionsmaß A' des betreffenden Schneidbretts 116 gewährleistet.

Die Zuordnung eines passenden Schneidbretts 116 ist auch noch nachträglich möglich, wenn die betreffende Spüle 100 bereits ausgeliefert worden ist, da die Klasse, in welche die betreffende Spüle 100 eingeordnet worden ist, aus der Markierung 143 an der Spüle 100 entweder direkt ablesbar oder aus der in dieser Markierung 143 enthaltenen Information mit Hilfe einer beim Hersteller geführten Datenbank ermittelbar ist. Das nachbestellte Schneidbrett 116 der der betreffenden Spüle 100 zugeordneten Klasse wird dann dem Abnehmer zugesandt, um mit der betreffenden Spüle 100 zu einer paßgenauen Spüle-Zubehörteil-Kombination vereint zu werden.

## Patentansprüche

1. Verfahren zum Zuordnen von Zubehörteilen (116) zu Spülen (100), wobei die Spülen (100) mindestens ein, insbesondere aufgrund von Fertigungstoleranzen, variierendes Maß (A) aufweisen, umfassend folgende Verfahrensschritte:
- Zuordnung einer Spüle (100) zu einer Klasse einer Klasseneinteilung, die mehrere Klassen umfaßt, wobei jeder Klasse ein Intervall von Werten des variierenden Maßes (A) zugeordnet ist; und
- Zuordnung eines Zubehörteils (116) zu der Spüle in Abhängigkeit von der Klasse, welcher die Spüle (100) zugeordnet worden ist.

2. Verfahren nach Anspruch 1, **dadurch gekennzeichnet, daß** die Klasseneinteilung mindestens drei, vorzugsweise mindestens sechs, verschiedene Klassen umfaßt.

3. Verfahren nach einem der Ansprüche 1 oder 2, **dadurch gekennzeichnet, daß** die einer Klasse zugeordnete Spüle (100) und/oder deren Verpackung mit einer der Klasse zugeordneten Markierung versehen wird.

4. Verfahren nach Anspruch 3, **dadurch gekennzeichnet, daß** die der Klasse zugeordnete Markierung mindestens ein alphanumerisches Zeichen, vorzugsweise einen Buchstaben, umfaßt.

5. Verfahren nach einem der Ansprüche 3 oder 4, **dadurch gekennzeichnet, daß** die Markierung durch Stempeln angebracht wird.

6. Verfahren nach einem der Ansprüche 1 bis 5, **dadurch gekennzeichnet, daß** die Zuordnung einer Spüle (100) zu einer Klasse dadurch erfolgt, daß der Wert des Maßes (A) an der Spüle (100) bestimmt wird und die Spüle (100) derjenigen Klasse zugeordnet wird, deren Intervall den bestimmten Wert des Maßes (A) umfaßt.

7. Verfahren nach einem der Ansprüche 1 bis 6, **dadurch gekennzeichnet, daß** die Zuordnung einer Spüle (100) zu einer Klasse dadurch erfolgt, daß mindestens ein einer Klasse zugeordnetes Vergleichsobjekt mit dem Maß (A) der Spüle (100) verglichen wird.

8. Verfahren nach Anspruch 7, **dadurch gekennzeichnet, daß** mehrere Vergleichsobjekte mit dem Maß (A) der Spüle (100) verglichen werden und die Spüle (100) derjenigen Klasse zugeordnet wird, welcher das Vergleichsobjekt mit dem größten zu der Spüle (100) passenden Vergleichsmaß zugeordnet ist.

9. Verfahren nach einem der Ansprüche 7 oder 8, **dadurch gekennzeichnet, daß** als Vergleichsobjekt eine Lehre verwendet wird.

10. Verfahren nach einem der Ansprüche 7 bis 9, **dadurch gekennzeichnet, daß** als Vergleichsobjekt ein Zubehörteil (116) verwendet wird.

11. Verfahren nach einem der Ansprüche 1 bis 10, **dadurch gekennzeichnet, daß** das Zubehörteil (116) nach der Zuordnung zu der Spüle (100) zusammen mit der Spüle verpackt wird.

12. Verfahren nach einem der Ansprüche 1 bis 11, **dadurch gekennzeichnet, daß** das Zubehörteil (116) mit einem einer Klasse zugeordneten Maß (A') gefertigt wird, bevor es einer derselben Klasse zugeordneten Spüle (100) zugeordnet wird.

13. Verfahren nach einem der Ansprüche 1 bis 12, **dadurch gekennzeichnet, daß** das Zubehörteil auf ein einer Klasse zugeordnetes Maß (A') eingestellt wird, bevor es einer derselben Klasse zugeordneten Spüle (100) zugeordnet wird.

14. Verfahren nach einem der Ansprüche 1 bis 13, **dadurch gekennzeichnet, daß** das Zubehörteil (116) einer der Klassen der Klasseneinteilung zugeordnet wird, bevor es einer derselben Klasse zugeordneten Spüle (100) zugeordnet wird.

15. Verfahren nach Anspruch 14, **dadurch gekennzeichnet, daß** das einer Klasse zugeordnete Zubehörteil (116) und/oder dessen Verpackung (144) mit einer der Klasse zugeordneten Markierung (146) versehen wird.

16. Verfahren nach einem der Ansprüche 1 bis 15, **dadurch gekennzeichnet, daß** die Spüle (100) und/oder deren Verpackung mit einer der Klasse, welcher die Spüle (100) zugeordnet worden ist, zugeordneten Spülenmarkierung (143) versehen wird und daß das Zubehörteil (116) und/oder dessen Verpackung (144) mit einer der Klasse, der das Zubehörteil (116) zugeordnet worden ist, zugeordneten Zubehörteilmarkierung (146) versehen wird, wobei die derselben Klasse zugeordneten Zubehörmarkierungen (146) und Spülenmarkierungen (143) miteinander übereinstimmen.

17. Spüle, die mindestens ein, insbesondere aufgrund von Fertigungstoleranzen, variierendes Maß (A) aufweist, wobei die Spüle mit einer Markierung (143) versehen ist, welche einer Klasse aus einer Klasseneinteilung zugeordnet ist, wobei jeder Klasse der Klasseneinteilung ein Intervall von Werten des variierenden Maßes (A) zugeordnet ist.

18. Verpackung einer Spüle, wobei die Spüle mindestens ein, insbesondere aufgrund von Fertigungstoleranzen, variierendes Maß (A) aufweist, wobei die Verpackung mit einer Markierung versehen ist, welche einer Klasse aus einer Klasseneinteilung zugeordnet ist, wobei jeder Klasse der Klasseneinteilung ein Intervall von Werten des variierenden Maßes (A) der Spüle (100) zugeordnet ist.

19. Zubehörteil für eine Spüle (100), wobei die Spüle mindestens ein, insbesondere aufgrund von Fertigungstoleranzen, variierendes Maß (A) aufweist, wobei das Zubehörteil (116) mit einer Markierung versehen ist, welche einer Klasse aus einer Klasseneinteilung zugeordnet ist, wobei jeder Klasse der Klasseneinteilung ein Intervall von Werten des variierenden Maßes (A) der Spüle (100) zugeordnet ist.

20. Verpackung eines Zubehörteils (116) für eine Spüle (100), wobei die Spüle mindestens ein, insbesondere aufgrund von Fertigungstoleranzen, variierendes Maß (A) aufweist, wobei die Verpackung (144) mit einer Markierung (146) versehen ist, welche einer Klasse aus einer Klasseneinteilung zugeordnet ist, wobei jeder Klasse der Klasseneinteilung ein Intervall von Werten des variierenden Maßes (A) der Spüle (100) zugeordnet ist.

21. Kombination aus einer Spüle (100) und einem Zubehörteil (116) für die Spüle (100), wobei die Spüle mindestens ein, insbesondere aufgrund von Fertigungstoleranzen, variierendes Maß (A) aufweist und wobei die Spüle und/oder eine Verpackung der Spüle mit einer Markierung (143) versehen ist, welche einer Klasse aus einer Klasseneinteilung zugeordnet ist, wobei jeder Klasse der Klasseneinteilung ein Intervall von Werten des variierenden Maßes (A) der Spüle (100) zugeordnet ist.

22. Kombination nach Anspruch 21, **dadurch gekennzeichnet, daß** das Zubehörteil (116) und/oder dessen Verpackung (144) mit einer Markierung (146) versehen ist, welche einer Klasse aus einer Klasseneinteilung zugeordnet ist, wobei jeder Klasse der Klasseneinteilung ein Intervall von Werten des variierenden Maßes (A) der Spüle (100) zugeordnet ist.
